# FASCICULE DE BREVET EUROPEEN

(11) **EP 0 457 682 B1**
(45) Date de publication et mention de la délivrance du brevet: **26.01.1994**
(21) Numéro de dépôt: 91401265.3
(22) Date de dépôt: 16.05.1991
(51) Int. Cl.: B08B 9/02, G21C 17/00, G21F 5/00, F28G 1/16, E03F 9/00

(54) **Procédé de débouchage d'une tuyauterie véhiculant des produits dangereux**
Verfahren zur Beseitigung von Verstopfungen in einer Rohrleitung für den Transport von gefährlichen Stoffen
Method of unblocking a pipe carrying dangerous products

(30) Priorité: 18.05.1990 FR 9006263
(43) Date de publication de la demande: 21.11.1991
(73) Titulaire: COGEMA (COMPAGNIE GENERALE DES MATIERES NUCLEAIRES), F-78141 Velizy-Villacoublay Cédex (FR)
(72) Inventeur: Guyonnet, Alain, F-50330 Montebourg (FR); Lestournel, Eric, F-50690 Martinvast (FR)
(74) Mandataire: Mongrédien, André

(56) Documents cités:
- EP-A- 0 123 598
- WO-A-89/09661
- FR-A- 2 352 377
- FR-A- 2 573 236
- FR-A- 2 625 597
- GB-A- 885 626
- GB-A- 1 276 591
- US-A- 2 041 209
- US-A- 3 711 993
- US-A- 4 007 797

## Description

L'invention concerne un procédé permettant de déboucher à distance une tuyauterie dans laquelle circulent des produits dangereux en présence desquels il est souhaitable de maintenir un confinement lors des opérations de débouchage.

Dans de nombreuses installations industrielles, notamment dans les industries chimique et nucléaire, on trouve des tuyauteries dans lesquelles circulent des liquides contenant des boues et des particules solides. Ces boues et ces particules créent des dépôts sur les parois des tuyauteries et conduisent fréquemment à la formation de bouchons.

Il existe actuellement différentes solutions pour déboucher des tuyauteries ainsi obturées.

Une première solution connue consiste à injecter successivement dans la tuyauterie de l'acide, puis de la soude afin de dissoudre le bouchon. Ce procédé, qui concerne essentiellement les bouchons poreux ou incomplètement étanches, a pour inconvénient d'être long et de ne pas toujours donner les résultats souhaités.

Un autre procédé de débouchage connu consiste à mettre sous pression la partie bouchée de la tuyauterie, en raccordant celle-ci directement sur l'orifice de refoulement d'une pompe à épreuve. Cette technique, simple à mettre en oeuvre, a cependant pour inconvénient de mettre en pression la tuyauterie, ce qui a parfois pour effet de tasser le bouchon et rend son débouchage par les autres procédés existants pratiquement impossible. De plus, la montée en pression du circuit peut avoir pour effet une remontée de liquide, par hypothèse dangereux, au moment de la décompression.

Une troisième technique voisine de la précédente consiste à envoyer de la vapeur sous pression contrôlée dans la tuyauterie bouchée. Elle présente pratiquement les mêmes inconvénients que celle qui consiste à utiliser une pompe à épreuve.

Un autre procédé connu et facile à mettre en oeuvre consiste à introduire dans la tuyauterie bouchée un flexible métallique en acier appelé "furet mécanique". Ce procédé a cependant pour inconvénient d'entraîner un risque de dégradation de la tuyauterie. De plus, le retrait du flexible est délicat lorsque l'opération est effectuée dans un circuit fortement irradiant.

Enfin, une dernière technique connue, décrite dans le document FR-A-2 611 540, consiste à appliquer sur la colonne de liquide contenue dans la tuyauterie une excitation basse fréquence. Ce procédé, qui présente de nombreux avantages, a cependant pour inconvénient de mettre en pression le circuit et d'entraîner une légère excitation des tuyauteries.

L'invention a précisément pour objet un nouveau procédé de débouchage de tuyauteries permettant d'éviter toute mise en pression de ces dernières et présentant une efficacité plus grande et des inconvénients moindres que la technique consistant à utiliser un furet mécanique.

A cet effet, il est proposé conformément à l'invention un procédé de débouchage d'une tuyauterie véhiculant des produits dangereux, cette tuyauterie débouchant dans un corps tubulaire normalement obturé par un organe amovible, ce procédé étant caractérisé par le fait qu'il comprend les étapes suivantes :
- dépose de l'organe amovible et mise en place d'un organe de guidage dans le corps tubulaire ;
- introduction dans la tuyauterie, au travers d'une boîte étanche accostée sur le corps tubulaire et d'un passage formé dans l'organe de guidage, d'un furet hydraulique relié à une source de fluide hydraulique sous haute pression, de façon à déboucher la tuyauterie par érosion d'un bouchon obstruant cette dernière ;
- récupération simultanée des effluents d'érosion, par un circuit de vidange débouchant dans ladite boîte étanche ;
- retrait du furet dans un enrouleur de conditionnement accosté sur la boîte étanche ;
- rinçage simultané du furet à sa sortie de l'organe de guidage, à l'intérieur de la boîte étanche ;
- dépose de l'organe de guidage et remise en place de l'organe amovible.

Selon ce procédé, on utilise avantageusement un furet comprenant une buse possédant au moins un orifice avant servant au débouchage de la tuyauterie et des orifices arrière assurant l'avance du furet, l'évacuation des effluents d'érosion vers la boîte étanche et le nettoyage de la tuyauterie.

De préférence, avant de déposer l'organe amovible, on procède à un recul progressif de cet organe de façon à vidanger la tuyauterie et à rincer ledit organe.

Dans le cas d'une tuyauterie débouchant latéralement dans le corps tubulaire, on positionne angulairement l'organe de guidage lors de sa mise en place et on utilise un organe de guidage dont le passage comporte un orifice de sortie équipé d'une languette de guidage rabattable qui se déploie automatiquement dans ladite tuyauterie lorsque le furet arrive au contact de cette languette.

Deux modes de mises en oeuvre du procédé de débouchage selon l'invention vont à présent être décrits, à titre d'exemples non limitatifs, en se référant aux dessins annexés, dans lesquels :
- les figures 1a à 1f sont des coupes longitudinales schématiques illustrant les principales étapes de mise en oeuvre du procédé de débouchage selon l'invention, dans le cas où l'organe amovible permettant d'accéder à la tuyauterie à déboucher est une tige porte tuyère réalisée en une seule pièce ;
- la figure 2 est une vue en coupe longitudinale représentant à plus grande échelle une fausse tige porte tuyère dont la mise en place permet d'introduire le furet dans la tuyauterie, après enlèvement de la tige porte tuyère ;
- la figure 3 est une vue en coupe partielle représentant le furet hydraulique utilisé conformément à l'invention ;
- les figures 4a à 4j sont des coupes longitudinales schématiques illustrant les principales étapes de mise en oeuvre du procédé de débouchage selon l'invention, dans le cas où l'organe amovible permettant d'accéder à la tuyauterie à déboucher comprend un ensemble porte tuyère réalisé en deux parties démontables séparément ;
- la figure 5 est une vue de côté représentant, en coupe partielle, une boîte à gants à barillet utilisée pour déposer la rallonge de l'ensemble porte tuyère, mettre en place une fausse rallonge, introduire le furet et en assurer le retrait, dans le deuxième mode de réalisation de l'invention illustré sur les figures 4a à 4j ;
- la figure 6 illustre plus en détail l'étape de déconnexion de la rallonge d'avec la tige porte tuyère au moyen de la boîte à gants à barillet illustrée sur la figure 5 ; et
- la figure 7 est une vue en coupe comparable à la figure 6 illustrant l'introduction du furet dans la tuyauterie à déboucher, ainsi que son retrait, au travers de la boîte à gants à barillet de la figure 5 et d'une fausse tige porte tuyère prolongée par une fausse rallonge, précédemment mises en place dans le corps de l'éjecteur.

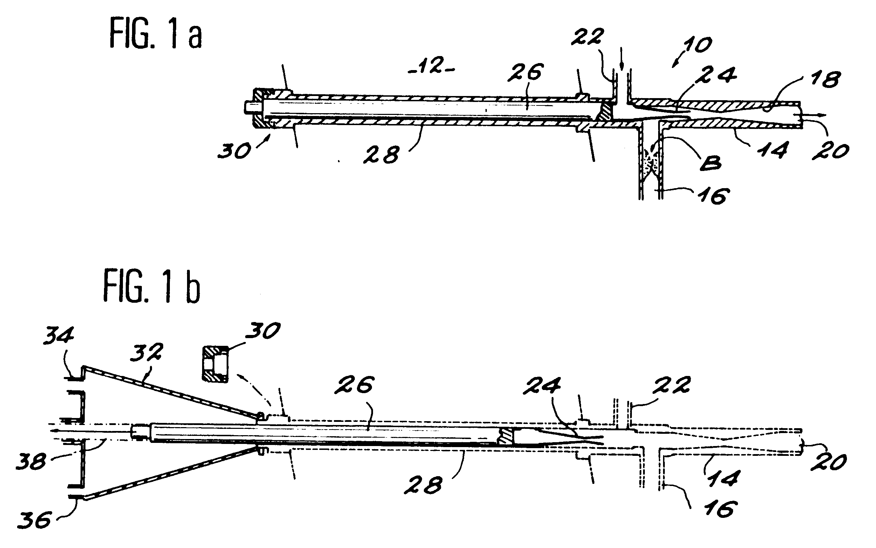

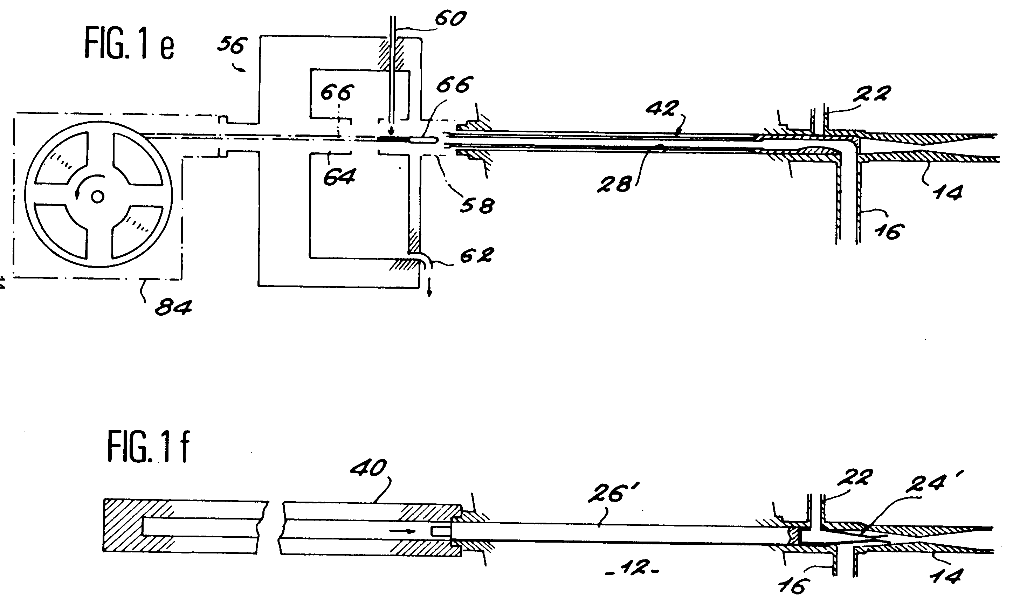

Sur la figure 1a, on a représenté de façon très schématique un premier type d'éjecteur comportant une tuyère amovible dont la dépose permet d'accéder à des tuyauteries véhiculant des produits dangereux tels que produits radioactifs et dans lesquels peuvent éventuellement se former des bouchons, en raison par exemple de la présence de particules solides ou de boues dans le liquide circulant à l'intérieur de ces tuyauteries. Cet éjecteur, désigné de façon générale par la référence 10 sur la figure 1a, peut notamment appartenir à une installation de retraitement de combustibles nucléaires. Cette installation est confinée vis-à-vis de l'extérieur par une paroi représentée en partie en 12 sur la figure 1a.

L'éjecteur 10 comprend un corps 14, généralement de forme tubulaire, fixé à la paroi 12. A proximité de cette dernière, une tuyauterie 16 d'arrivée de fluide débouche à angle droit sur le corps tubulaire 14. En s'éloignant de la paroi 12 à partir de cette tuyauterie d'arrivée 16, le corps 14 de l'éjecteur comporte une restriction 18 comprenant une partie convergente puis une partie divergente. Au-delà de cette restriction 18, le corps 14 débouche dans une tuyauterie 20 de sortie du fluide.

Une troisième tuyauterie 22 débouche latéralement sur le corps 14, en un emplacement encore plus proche de la paroi 12 que la tuyauterie d'arrivée 16. Cette tuyauterie 22 sert à acheminer dans l'éjecteur 10 le fluide moteur au moyen duquel le fluide contenu dans la canalisation 16 est aspiré vers la restriction 18, puis refoulé dans la canalisation de sortie 20. A cet effet, la canalisation 22 débouche dans une tuyère 24 dont l'embouchure, orientée selon l'axe du corps 14, est située légèrement en amont de la partie de plus petit diamètre de la restriction 18.

Afin de permettre le remplacement de la tuyère 24 ainsi qu'une intervention éventuelle à l'intérieur du corps 14 de l'éjecteur, la tuyère est montée de façon amovible dans ce dernier. Pour permettre ce démontage, la tuyère 24 est fixée sur une tige cylindrique 26, porte tuyère, qui traverse de façon étanche la paroi 12. Plus précisément, la tige cylindrique 26 est placée dans un prolongement tubulaire 28 du corps 14 de l'éjecteur, qui traverse de part en part la paroi 12 et est équipée intérieurement de moyens d'étanchéité appropriés (non représentés).

L'ensemble formé par la tige cylindrique 26 et la tuyère 24 est maintenu en place contre un épaulement formé à l'intérieur du corps 14 par un écrou de fixation 30 vissé sur l'extrémité filetée du prolongement tubulaire 28 située à l'extérieur de la paroi 12, cet écrou 30 étant en appui contre un épaulement formé à l'extrémité extérieure de la tige cylindrique 26.

Dans une installation de ce type, le procédé selon l'invention permet, après enlèvement de l'ensemble formé par la tige cylindrique 26 et la tuyère 24, de déboucher l'une quelconque des tuyauteries 16 ou 20 lorsqu'un bouchon s'est formé dans cette tuyauterie. Dans la description qui va suivre, on suppose qu'un bouchon B s'est formé dans la tuyauterie d'arrivée 16. Le procédé est identique lorsque la tuyauterie à déboucher est la tuyauterie 20, l'organe qui assure le guidage du furet hydraulique selon l'invention étant simplement de forme différente.

Conformément à l'invention, on procède au débouchage de la tuyauterie concernée après avoir démonté la tige 26 portant la tuyère 24, en remplaçant cette tige par une tige portant une fausse tuyère servant à guider un furet hydraulique jusqu'au bouchon B formé dans la tuyauterie. Comme on le verra en détail par la suite, le furet hydraulique est conçu de façon à assurer lui même son avance dans la tuyauterie, après avoir été relié à une source de fluide hydraulique sous pression. Lorsque le débouchage est terminé, le retrait du furet est assuré par un enrouleur servant également à son conditionnement, pour tenir compte de l'atmosphère hostile régnant sur le lieu de l'intervention. La tige portant la fausse tuyère est ensuite déposée et remplacée par une tige portant une tuyère, généralement neuve.

Comme l'illustre schématiquement la figure 1b, ces différentes opérations peuvent avantageusement être précédées d'une étape de rinçage au cours de laquelle l'ensemble formé par la tige cylindrique 26 et la tuyère 24 est soumis à l'action d'un liquide de rinçage tel que de l'eau.

Pour effectuer cette opération, on démonte l'écrou 30 qui assure normalement le blocage de la tige cylindrique 26 portant la tuyère 24, et on accoste de façon étanche sur l'extrémité du prolongement tubulaire 28 du corps d'éjecteur 14 une boîte de vidange 32. Cette boîte de vidange 32 présente de façon générale la forme d'un entonnoir dont l'extrémité de plus petit diamètre est fixée sur le prolongement tubulaire 28. Son extrémité opposée, fermée par une cloison en forme de disque, est reliée en partie haute par une tubulure 34 à un circuit d'amenée de liquide de rinçage et, en partie basse, par une tubulure 36 à un circuit de vidange.

La cloison en forme de disque fermant l'extrémité de la boîte de vidange 32 présente en son centre un passage circulaire dont le diamètre est égal au diamètre de la tige cylindrique 26 portant la tuyère 24. Une rallonge cylindrique 38 présentant le même diamètre que la tige cylindrique 26 est connectée à l'extrémité de cette dernière, par exemple au moyen d'une goupille (non représentée), avant la mise en place de la boîte de vidange 32. Cette rallonge 38, qui traverse de façon étanche l'ouverture formée dans l'extrémité de la boîte de vidange 32 opposée au prolongement tubulaire 28, permet de procéder à un recul limité de la tige cylindrique 26 portant la tuyère 24 alors qu'un liquide de rinçage tel que de l'eau est introduit dans la boîte de vidange 32 par la tubulure 34. L'ensemble amovible précité est ainsi lavé progressivement lors de son passage à l'intérieur de la boîte de vidange 32. Les effluents sont évacués vers le circuit de vidange par la tubulure 36.

Cette opération préliminaire permet de vidanger les tuyauteries qui débouchent dans le corps 14 de l'éjecteur.

Lorsque cette opération de lavage et de vidange est terminée, la tige cylindrique 26 supportant la tuyère 24 est remise en place à l'aide de la rallonge 38, puis la boîte de vidange 32 ainsi que la rallonge 38 sont démontées.

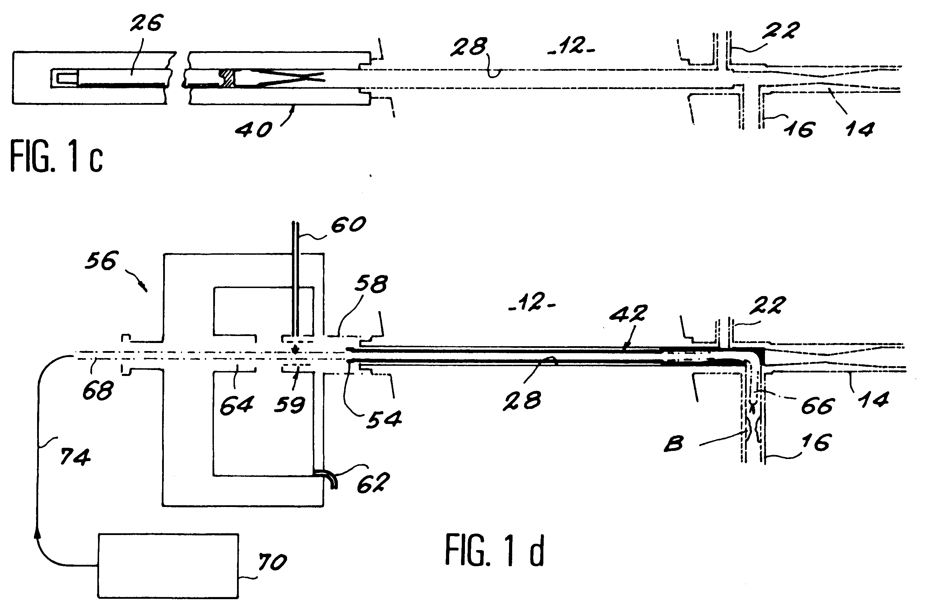

Comme l'illustre très schématiquement la figure 1c, on procède ensuite à la dépose de la tige cylindrique 26 portant la tuyère 24, par exemple dans un fourreau de plomb 40 que l'on accoste à l'extrémité du prolongement tubulaire 28 du corps 14. Le recul de la tige cylindrique et la tuyère à l'intérieur de ce fourreau est assuré par des moyens connus quine font pas partie de l'invention.

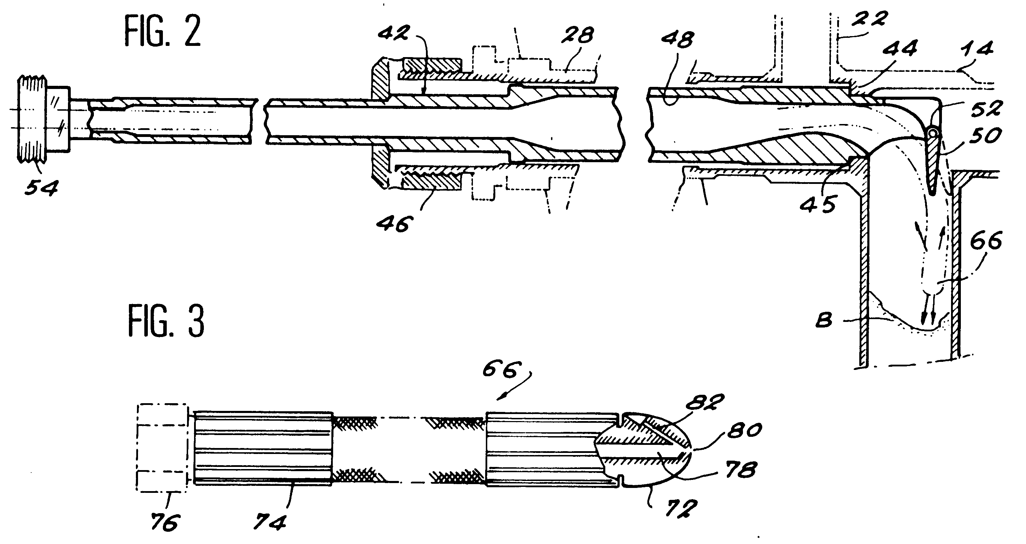

Conformément à une première caractéristique essentielle de l'invention, on introduit ensuite dans le corps 14, au travers de son prolongement tubulaire 28, un organe de guidage constitué par une tige de guidage 42. Cette tige de guidage vient occuper la place précédemment occupée par la tige cylindrique 26 et par la tuyère 24. La tige de guidage présente généralement une forme tubulaire qui apparaît plus en détail sur la figure 2. Elle définit ainsi un passage intérieur de guidage 48. Le positionnement axial de la tige 42 est assuré par la venue en butée d'un épaulement 44 contre l'épaulement 45 formé dans le corps 14 de l'éjecteur, entre les tuyauteries 16 et 22, et contre lequel est normalement en appui la tuyère 24. Un écrou 46 vissé sur l'extrémité du prolongement tubulaire 28 du corps 14 permet le maintien dans cette position de la tige de guidage 42.

Dans le mode de réalisation illustré sur la figure 2, appliqué au débouchage de la tuyauterie 16, le passage de guidage 48 formé dans la fausse buse 42 effectue un virage à 90° en face de la tuyauterie 16. Des repères (non représentés) permettent à l'opérateur de s'assurer que l'embouchure du passage 48 se trouve bien en face de la tuyauterie 16 lorsque l'écrou 46 est serré.

L'extrémité du passage 48 qui se trouve en face de la tuyauterie 16 est normalement obturée par une languette rabattable 50, articulée sur la tige de guidage 42 autour d'un axe 52 perpendiculaire à l'axe de cette tige. La languette 50 est normalement maintenue dans sa position d'obturation de l'extrémité du passage 48, par exemple, par un ou plusieurs ressorts (non représentés) tels que des ressorts de torsion montés sur l'axe 52.

L'extrémité de la tige de guidage 42, située à l'extérieur, est terminée par un raccord 54, par exemple à vis.

Comme l'illustre la figure 1d, ce raccord 54 permet de relier la fausse buse 42 à une boîte de lavage 56. Plus précisément, le raccord 54 est connecté sur un raccord complémentaire (non représenté) formé à l'extrémité d'un manchon rectiligne 58 dont l'extrémité opposée débouche dans la boîte de lavage 56.

De façon plus précise, le manchon rectiligne 58 se prolonge à l'intérieur de la boîte de lavage 56, où il comporte une chambre annulaire 59 dans laquelle débouche une canalisation 60 raccordée sur un circuit d'amenée de liquide de lavage. La chambre annulaire 59 communique avec le passage formé à l'intérieur du manchon 58 par des orifices au travers desquels peut être injecté le liquide de lavage. Une tubulure 62, raccordée sur un circuit de vidange, débouche dans le fond de la boîte de lavage 56 afin d'acheminer dans le circuit de vidange les effluents récupérés dans le fond de la boîte de lavage.

Un manchon de guidage rectiligne 64 est situé dans le prolongement du manchon rectiligne 58, de telle sorte que les extrémités de ces deux manchons situés à l'intérieur de la boîte de lavage 56 soient situées à proximité l'une de l'autre. Ce manchon de guidage 64 traverse la paroi opposée de la boîte de lavage 56 et comporte à son extrémité située à l'extérieur de cette dernière un raccord 65, par exemple fileté.

Comme l'illustre très schématiquement la figure 1d, lorsque le manchon rectiligne 58 a été raccordé sur l'extrémité de la tige de guidage 42, on procède à l'introduction d'un furet hydraulique 66 par l'extrémité extérieure du manchon de guidage 64. Pour cela, on raccorde l'extrémité arrière du furet hydraulique 66 à un groupe hydraulique haute pression 70.

Comme l'illustre plus en détail la figure 3, le furet hydraulique 66 comprend à son extrémité avant une buse 72 en forme d'ogive. Cette buse 72 est fixée sur un tube flexible renforcé 74 terminé à son extrémité arrière par un écrou de raccordement 76 par lequel le furet hydraulique 66 est raccordé sur le groupe hydraulique 70. La longueur du tube flexible 74 est déterminée en fonction de la distance à parcourir dans les tuyauteries par la buse 72.

La buse 72 comporte un passage intérieur 78 qui communique avec le tube flexible 74. Ce passage 78 débouche à l'extrémité avant de la buse 72 et selon l'axe de cette dernière par un orifice avant 80 et sur la périphérie de la buse 72 par des orifices arrière 82, par exemple au nombre de trois, orientés vers l'extérieur et vers l'arrière. L'orifice avant 80 a pour fonction d'assurer le débouchage de la tuyauterie, alors que les orifices arrière 82 ont pour fonction d'assurer l'avance du furet 66, le nettoyage de la tuyauterie dans laquelle ce dernier circule et l'évacuation des effluents vers la boîte de lavage.

Lorsque la buse 72 du furet hydraulique 66 est introduite dans le manchon de guidage 64 de la boîte de lavage 56, le groupe hydraulique haute pression 70 est mis en action de sorte que du fluide hydraulique sous haute pression est éjecté par les orifices 80 et 82 de la buse 72. Compte tenu de l'orientation vers l'arrière des orifices 82, la buse 72 ainsi que le tube souple 68 auquel cette dernière est reliée sont introduits automatiquement dans le manchon rectiligne 58, puis dans la tige de guidage 42.

Lorsque la buse 72 arrive au contact de la languette rabattable 50 de la tige de guidage, cette languette bascule dans la position illustrée en trait plein sur la figure 2, dans laquelle elle fait saillie légèrement à l'intérieur de la tuyauterie 16. L'introduction du furet hydraulique 66 dans cette dernière s'en trouve facilitée. L'avance du furet hydraulique dans la tuyauterie 16 se poursuit jusqu'à ce que le furet rencontre le bouchon B. Le jet de fluide hydraulique sortant par l'orifice avant 80 détruit alors progressivement le bouchon par érosion, tandis que les effluents sont évacués vers la boîte de lavage 56 par les jets sortant des orifices 82. Lorsqu'ils parviennent dans la boîte de lavage 56, ces effluents sont évacués vers le circuit de vidange par la tubulure 62.

Il est à noter que les jets sortant des orifices arrière 82 assurent un nettoyage de la tuyauterie, lors de la progression de la buse dans cette dernière.

Lorsque le débouchage de la tuyauterie 16 est terminé, le groupe hydraulique 70 est déconnecté du tube flexible 74 et l'extrémité de ce dernier est fixée au moyeu d'un enrouleur de conditionnement 72 illustré schématiquement sur la figure 1e. Au moyen de cet enrouleur 72, l'opérateur effectue le retrait progressif du furet 66. Simultanément, du fluide de lavage est introduit par la canalisation 60 afin de procéder au lavage progressif du furet hydraulique 66 avant qu'il ne soit introduit dans l'enrouleur 72. Comme précédemment, les effluents sont évacués par la tubulure 62 vers le circuit de vidange.

Lorsque le furet est conditionné dans l'enrouleur 72, ce dernier est déconnecté de la boîte de lavage 56 et cette dernière est également démontée.

Comme l'illustre ensuite très schématiquement la figure 1f, on procède alors à la dépose de la tige de guidage 42, puis à la mise en place d'une tige cylindrique 26' portant une tuyère 24' neuve. Pour cela, on utilise des moyens comparables à ceux qui ont été décrits précédemment en se référant à la figure 1c, c'est-à-dire notamment un fourreau de plomb 40 que l'on accoste à l'extrémité du prolongement tubulaire 28 du corps 14.

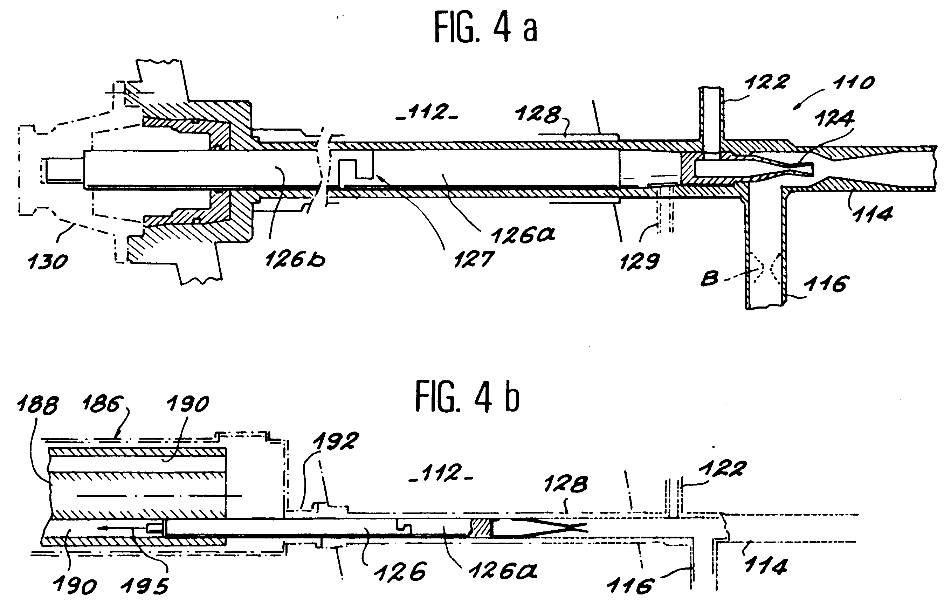

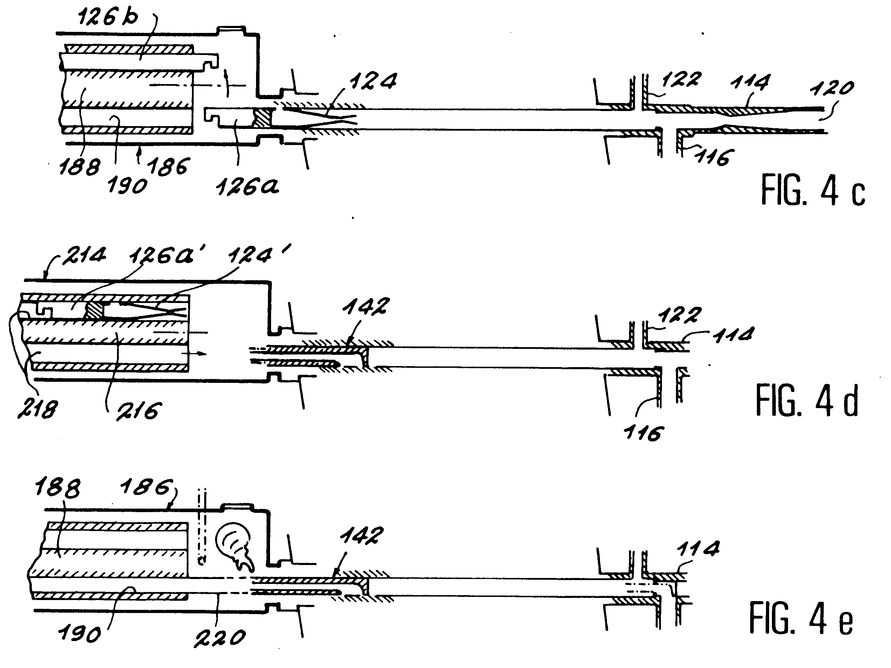

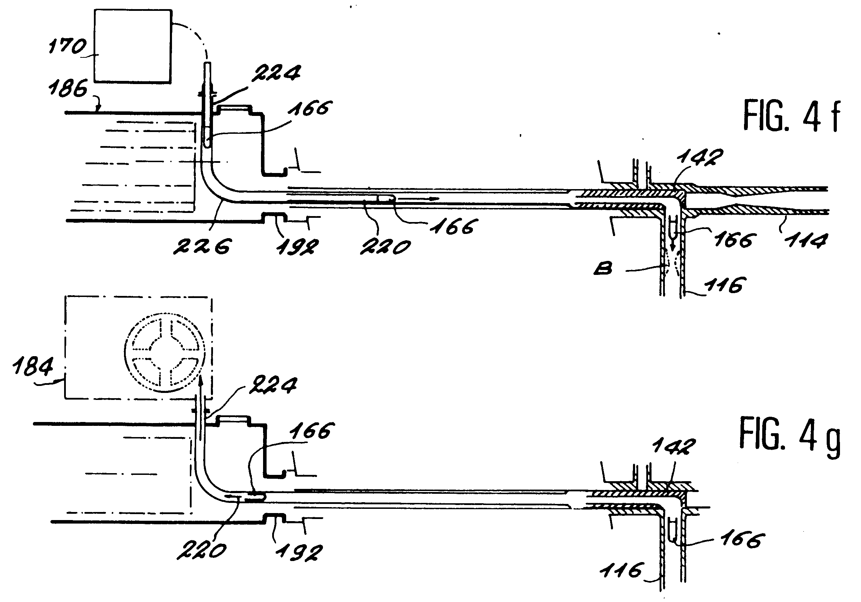

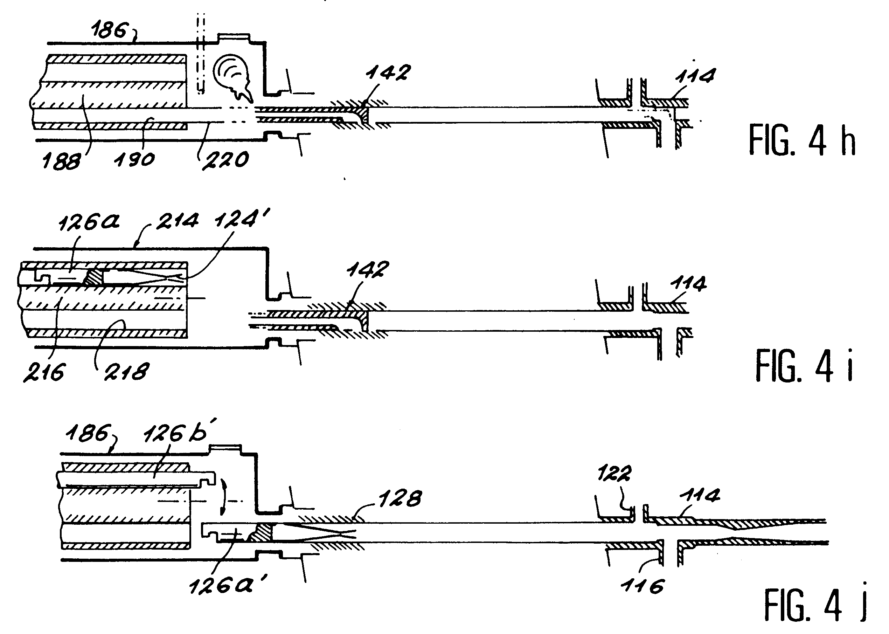

On décrira à présent, en se référant aux figures 4 à 7, le débouchage d'une tuyauterie appartenant comme dans le premier mode de réalisation décrit à une installation de retraitement de combustibles nucléaires, l'accès à cette tuyauterie se faisant par un éjecteur dont la structure est légèrement différente de la précédente. Pour faciliter la compréhension, les mêmes chiffres de référence augmentés de 100 sont utilisés pour désigner des organes remplissant des fonctions similaires.

Comme l'illustre la figure 4a, le circuit à déboucher comprend dans ce cas un éjecteur 110 présentant un corps 114, une tuyère 124, une tuyauterie 116 d'arrivée de fluide, une tuyauterie 120 de refoulement de ce fluide et un tuyauterie 122 servant à alimenter en fluide moteur la tuyère 124. Le corps 114 de l'éjecteur 110 comporte un prolongement tubulaire 128 qui traverse la paroi 112 assurant le confinement du circuit par rapport à l'extérieur.

Dans ce deuxième mode de réalisation, la tuyère 124 est solidaire d'une tige cylindrique 126a prolongée par une rallonge cylindrique 126b à l'intérieur du prolongement tubulaire 128. Les extrémités adjacentes de la tige 126a et de la rallonge 126b présentent des découpes complémentaires en forme de crochets 127 qui rendent ces deux pièces solidaires en translation tout en autorisant leur désolidarisation par un mouvement radial de l'une par rapport à l'autre.

L'ensemble comprenant la rallonge 126b, la tige 126a et la tuyère 124 est amovible, et normalement maintenu en place à l'intérieur du corps 114 de l'éjecteur et de son prolongement 128 par une pièce 130 fixée par exemple par des vis sur l'extrémité du prolongement 128.

Comme l'illustre la figure 4a, l'éjecteur 110 comporte en outre, dans ce mode de réalisation, une tuyauterie 129 d'évacuation des fuites débouchant également dans le corps 114, en un emplacement adjacent à la paroi 112 et normalement obturé par la tige 126a portant la tuyère 124.

Dans ce mode de réalisation, les principales étapes mises en oeuvre lors d'une opération de débouchage de l'une des tuyauteries 116 et 120, par exemple de la tuyauterie 116 dans le cas décrit ici, sont identiques à celles qui ont été décrites précédemment. Cependant, certaines étapes sont rendues plus complexes par la réalisation en deux parties déconnectables de la tige portant la tuyère 124 et le matériel utilisé est adapté à cette structure différente. Il est à noter que cette réalisation en deux parties de la tige portant la tuyère, qui est imposée dans ce cas par des impératifs dimensionnels et d'environnement, augmente la difficulté de maintien de confinement lors de l'intervention.

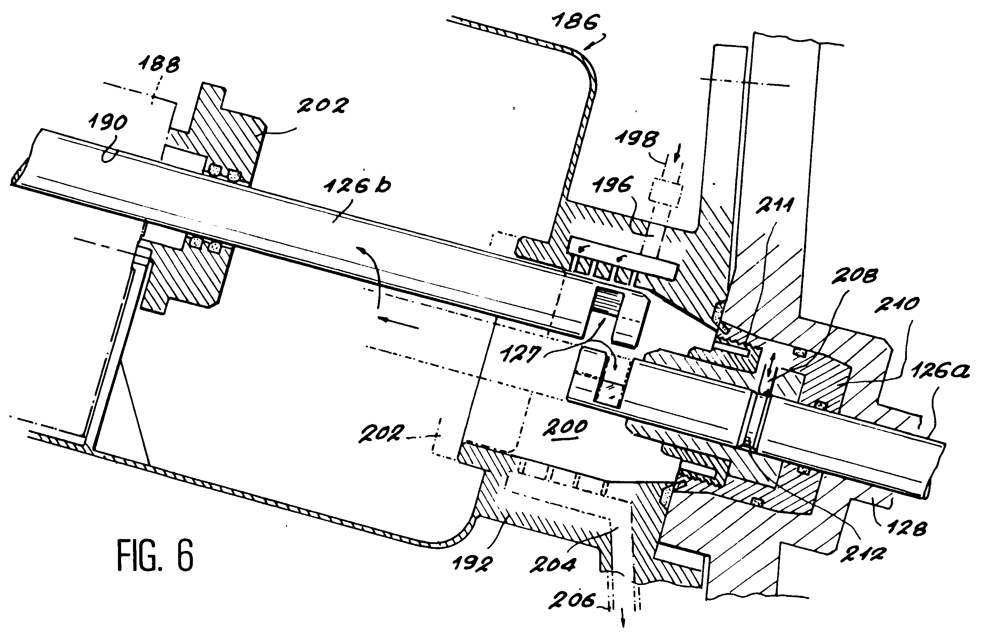

Ainsi, après enlèvement de la pièce 130, on place autour de l'extrémité extérieure de la rallonge 126b une bague de verrouillage 210 (figure 6) dans laquelle est monté un doigt 208 sollicité élastiquement contre la surface extérieure de la rallonge. Comme l'illustre schématiquement la figure 4b, on accoste ensuite à l'extrémité du prolongement tubulaire 128 du corps 114 de l'éjecteur une boîte à gants 186 qui remplit à la fois les fonctions de la boîte de vidange 32 et de la boîte de lavage 56 du premier mode de réalisation, ainsi que des fonctions supplémentaires.

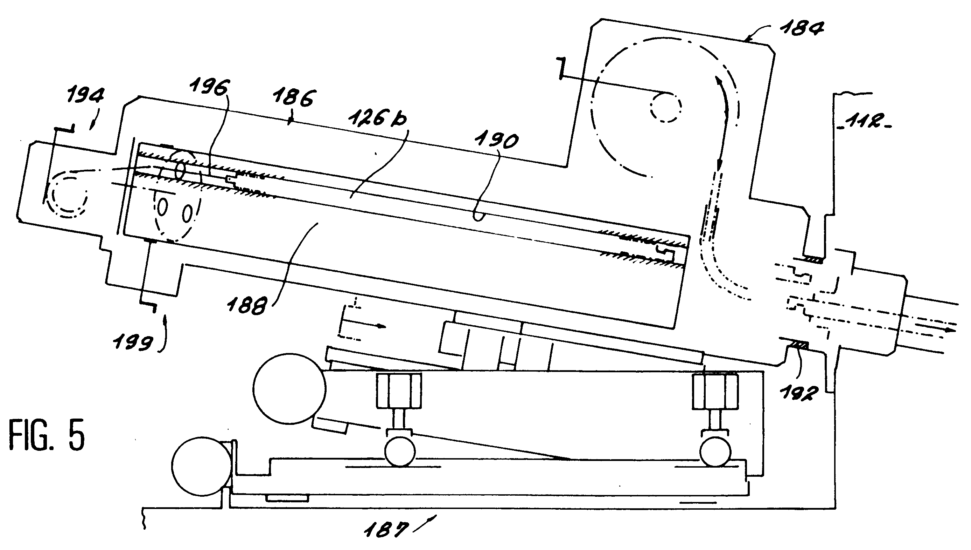

Comme le montre plus en détail la figure 5, cette boîte à gants 186 est montée sur un chariot 187 qui en assure le supportage, l'orientation et le positionnement. Ce chariot 187, qui peut être remplacé par tout autre moyen de supportage approprié, ne fait pas partie de l'invention de sorte qu'aucune description n'en sera faite.

La boîte à gants 186 est équipée intérieurement d'un barillet rotatif 188 comportant trois alvéoles 190 aptes à être amenées tour à tour dans le prolongement d'un fourreau 192 par lequel la boîte à gants 186 est raccordée de façon étanche à l'extrémité du prolongement tubulaire 128 du corps 114. Lorsqu'une opération de débouchage est mise en oeuvre, l'une des alvéoles 190 est vide alors que les deux autres alvéoles contiennent respectivement une rallonge 126b' neuve et une rallonge de tige de guidage du furet, comme on le verra par la suite.

Lorsque la boîte à gants 186 est raccordée à l'extrémité du prolongement tubulaire 128, l'opérateur fait tourner le barillet 188 à l'aide de moyens de commande de pivotement 189 qui peuvent être manuels ou motorisés, de façon à amener l'alvéole 190 vide en face du fourreau 192 (figure 4b).

Comme l'illustre la figure 5, l'extrémité de la boîte à gants 186 opposée au fourreau 192 porte un treuil 194 au moyen duquel la rallonge 126b peut alors être amenée progressivement à l'intérieur de l'alvéole vide 190, après accrochage du câble 195 de ce treuil à l'extrémité de la rallonge 126b. Cet accrochage est réalisé manuellement à l'aide de gants de manutention (non représentés) fixés à cet effet sur la paroi de la boîte à gants 186, dans la partie située entre le fourreau 192 et le barillet 188.

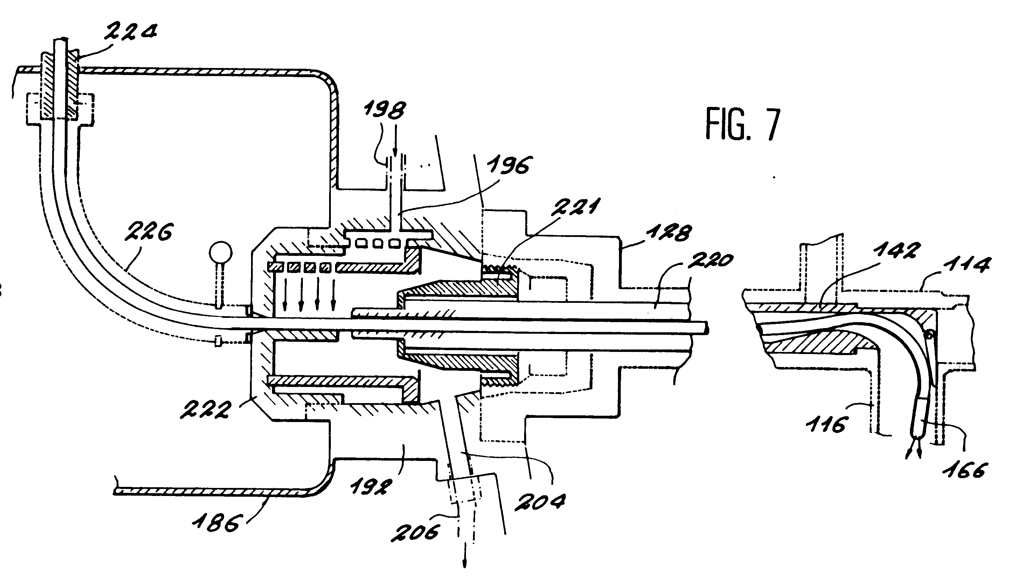

Par ailleurs et comme l'illustrent notamment les figures 6 et 7, le fourreau 192 comporte dans sa partie supérieure un passage 196 apte à être raccordé par une canalisation 198 à un circuit d'amenée d'un liquide de lavage tel que de l'eau. Le passage 196 débouche par plusieurs orifices dans une chambre 200 délimitée à l'intérieur du fourreau 192 et apte à être obturée, du côté de la boîte à gants 186, par un bouchon étanche 202. Ce bouchon est traversé en son centre par un passage équipé de joints d'étanchéité annulaires aptes à coopérer de façon étanche avec la surface extérieure de la rallonge 126b ou de la tige cylindrique 126a.

Dans sa partie basse, la chambre 200 est reliée par un passage 204 traversant le fourreau 192 à une canalisation 206 reliée à un circuit de vidange.

Après le raccordement de la boîte à gants 186 sur le prolongement 128 du corps de l'éjecteur, l'opérateur fixe sur l'extrémité de la rallonge 126b un embout de préhension (non représenté) initialement placé dans la boîte à gants, de même que le bouchon étanche 202 que l'opérateur fixe ensuite sur l'extrémité du fourreau 192 débouchant dans la boîte à gants.

L'opérateur fixe ensuite l'extrémité du câble 195 sur l'embout de préhension et manoeuvre le treuil 194, de telle sorte que la rallonge 126b est tirée progressivement dans l'alvéole vide 190. Au cours de son déplacement, la rallonge 126b est lavée par le liquide de lavage introduit par la canalisation 198 dans la chambre 200. Simultanément, la tuyauterie 129 d'évacuation des fuites est dégagée sous l'effet du recul de la tuyauterie 124, de sorte que les tuyauteries débouchant dans le corps 114 sont vidangées. La boîte à gants 186 remplit alors la fonction remplie par la boîte de rinçage 32 dans le premier mode de réalisation.

Cette opération se poursuit jusqu'à ce que le doigt 208 de la bague de verrouillage 210 (figure 6) pénètre dans une gorge 212 formée sur la tige cylindrique 126a, à proximité des découpes complémentaires 127 par lesquelles est raccordée la rallonge 126b.

Lorsque cette position est atteinte et comme l'illustre la figure 6, l'extraction de la rallonge 126b est stoppée, de même que l'introduction de liquide de lavage par la tuyauterie 198. Le bouchon étanche 202 est alors déconnecté du fourreau 192 et amené par coulissement sur la rallonge 126b jusqu'à proximité du barillet 188, au moyen des gants de manutention prévus à cet effet sur la boîte à gants 186.

L'opérateur commande alors une rotation du barillet 188, de façon à déplacer la rallonge 126b vers le haut en considérant la figure 6. Il déboîte ainsi l'extrémité de la rallonge 126b de l'extrémité adjacente de la tige cylindrique 126a. Lorsque ce déboîtement est terminé, le treuil 194 est à nouveau actionné afin d'escamoter en totalité la rallonge 126b dans l'alvéole 190 correspondante. Le bouchon étanche 202 est alors posé dans le fond de la boîte à gants 186.

Lorsque cette opération illustrée sur les figures 4c et 6 est terminée, on déconnecte la boîte à gants 186 du prolongement tubulaire 128 du corps 114 de l'éjecteur.

Comme l'illustre la figure 4d, on accoste ensuite sur l'extrémité du prolongement tubulaire 128 une enceinte mobile 214 d'évacuation de matériel. Cette enceinte 214 est une enceinte blindée équipée intérieurement d'un barillet rotatif 216 pourvu de trois alvéoles 218. Cette enceinte mobile peut notamment être réalisée conformément aux enseignements du document FR-A-83 06028. Elle est montée et positionnée sur un chariot analogue à celui qui supporte la boîte à gants 186.

Avant que l'enceinte mobile 214 ne soit accostée sur l'extrémité du prolongement tubulaire 128, deux des alvéoles 218 reçoivent respectivement une tige cylindrique 126a' portant une tuyère 124' neuve, ainsi qu'une tige de guidage 142. La troisième alvéole, initialement vide, sert à recevoir la tige cylindrique 126a et la tuyère 124 qui se trouvaient initialement dans le corps 114 de l'éjecteur 110.

Pour permettre son accostage à l'extrémité du prolongement tubulaire 128 du corps 114, l'enceinte mobile 214 présente une ouverture en face de laquelle peuvent être placées successivement chacune des alvéoles 218. Ces dernières sont en outre équipées intérieurement de moyens de préhension manoeuvrables depuis l'extérieur de l'enceinte.

Dans un premier temps, le barillet 216 est placé dans une position pour laquelle l'avéole 218 vide se trouve dans l'axe du prolongement tubulaire 128 du corps 114. En manoeuvrant les moyens de préhension placés dans cette alvéole, l'opérateur vient saisir l'extrémité de la tige cylindrique 126a de façon à escamoter cette dernière, ainsi que la tuyère 124 qu'elle supporte, à l'intérieur de cette alvéole.

Lorsque cette opération a été effectuée, l'opérateur fait tourner le barillet 216 pour amener en face du prolongement tubulaire 128 l'alvéole dans laquelle est placée la tige de guidage 142. La manoeuvre des moyens de préhension associés à cette alvéole permet d'introduire la tige de guidage 142 dans le prolongement tubulaire 128 comme on l'a représenté schématiquement sur la figure 4d.

La tige de guidage 142 présente dans l'ensemble une structure comparable à celle de la tige de guidage 42 décrite précédemment en se référant à la figure 2. Elle comprend par conséquent un passage intérieur servant au guidage du furet hydraulique jusqu'à la tuyauterie à déboucher lorsque la tige de guidage est en place. Elle comprend en outre, à proximité de son extrémité tournée vers l'extérieur une gorge annulaire dans laquelle pénètre le doigt 208 de la bague de verrouillage 210 illustrée sur la figure 6, lorsque la tige de guidage est introduite dans sa position d'attente comme l'illustre la figure 4d.

L'enceinte mobile 214 est ensuite déconnectée du prolongement tubulaire 118, sur lequel on vient à nouveau raccorder la boîte à gants 186 comme l'illustre la figure 4e. Après avoir fait tourner le barillet 188 de cette boîte à gants afin d'aligner l'alvéole 190 contenant la rallonge 220 de la tige de guidage 142 avec le fourreau 192, on amène l'extrémité de cette rallonge 220 au contact de l'extrémité adjacente de la tige de guidage 142, puis on réalise le raccordement de ces deux pièces en s'aidant des gants fixés sur la paroi de la boîte à gants 186.

Les extrémités adjacentes des deux pièces sont équipées à cet effet de moyens de raccordement étanches comprenant par exemple une bague apte à coulisser sur l'extrémité de la rallonge 220 pour venir se visser sur l'extrémité de la tige de guidage 142. Ces moyens de raccordement ne permettent le montage de la rallonge 220 sur la tige de guidage 142 que dans une seule position angulaire relative.

La rallonge 220 présente, comme la tige de guidage 142, un passage intérieur pour le guidage du furet.

Lorsque la rallonge 220 a été raccordée sur la tige de guidage 142, l'écrou 211 bloquant la bague de verrouillage 210 (figure 6) est dévissé à l'aide d'un outil approprié et la bague enlevée. L'ensemble formé par la rallonge 220 et la tige de guidage 142 est ensuite enfoncé dans le corps 114 de l'éjecteur jusqu'à ce que cet ensemble prenne en totalité la place occupée initialement par la tuyère 124, la tige 126a et sa rallonge 126b.

A l'aide des gants de manipulation fixés sur la paroi de la boîte à gants 186, l'opérateur effectue ensuite l'orientation angulaire de cet ensemble, par exemple à l'aide d'un outil s'adaptant sur l'extrémité de la rallonge 220, afin d'amener l'extrémité du canal de guidage formé dans la tige de guidage 142 dans le prolongement de la tuyauterie 116 à déboucher.

Lorsque cette opération est terminée, l'opérateur immobilise la rallonge 220 et la tige de guidage 142 en vissant un écrou 221 dans l'extrémité du prolongement 128 du corps 114. Ensuite, il met en place sur l'extrémité du fourreau 192 tournée vers la boîte à gants 186 un bouchon étanche 222, comme l'illustre plus en détail la figure 7. Entre un passage formé au centre de ce bouchon étanche 222 et un embout 224 traversant la paroi de la boîte à gants 186, l'opérateur raccorde ensuite un tube de guidage 226 en arc de cercle, en utilisant les gants fixés sur la paroi de la boîte à gants.

Après qu'un bouchon obturant l'embout 224 à l'extérieur de la boîte à gants 186 ait été retiré, un furet 166 identique à celui qui a été décrit en se référant à la figure 3 est introduit par la tubulure 224, après avoir été raccordé à un groupe hydraulique haute pression 170 (figure 4f).

Sous l'effet du fluide hydraulique sortant par les orifices arrière de la buse du furet 166, ce dernier progresse de lui-même dans le tube en arc de cercle 226, dans la rallonge 220, dans la tige de guidage 142, puis dans la tuyauterie 116. Le furet 166 effectue à l'intérieur de cette dernière l'opération de débouchage de la même manière que dans le premier mode de réalisation décrit.

Lorsque cette opération est terminée, le groupe hydraulique 170 est déconnecté de l'extrémité du tube flexible du furet et cette dernière extrémité est raccordée sur le moyeu d'un enrouleur de conditionnement 184. Par ailleurs, cet enrouleur 184 est connecté directement sur l'embout 224 traversant la paroi de la boîte à gants 186. Dans ces conditions et comme l'illustre la figure 4g, le furet hydraulique 166 est ramené progressivement dans l'enrouleur 184. Au cours de ce mouvement, le furet subit un lavage par le liquide de lavage introduit par la canalisation 198 décrite précédemment en se référant aux figures 6 et 7.

Lorsque le furet est conditionné à l'intérieur de l'enrouleur 184, celui-ci est déconnecté de la boîte à gants 186 et le tube en arc de cercle 226 ainsi que le bouchon étanche 222 et l'écrou 221 sont démontés. La bague de verrouillage 210 est remise en place et l'opérateur peut alors escamoter la rallonge 220 à l'intérieur de l'alvéole vide 190 qui se trouve encore dans le prolongement du fourreau 192, comme l'illustre la figure 4h. Lorsque la tige de guidage 142 arrive dans sa position de blocage déterminée par l'arrivée du doigt 208 dans la gorge correspondante (figure 6), la rallonge 220 est déconnectée de la tige de guidage 142 et la rallonge est totalement escamotée à l'intérieur de l'alvéole 190 correspondante du barillet 188.

La boîte à gants 186 est ensuite déconnectée du prolongement tubulaire 128 du corps 114 de l'éjecteur et l'enceinte mobile 214 est réaccostée sur l'extrémité du prolongement tubulaire 128. Dans ces conditions et comme l'illustre la figure 4i, la tige de guidage 142 est escamotée à l'intérieur de l'alvéole 218 vide du barillet 216, puis une tuyère neuve 124'portée par une tige cylindrique 126a' est introduite dans l'extrémité du prolongement tubulaire 128.

Enfin, l'enceinte mobile 214 est à son tour déconnectée du prolongement 128 et la boîte à gants 186 est à nouveau accostée sur ce prolongement. Dans ces conditions, une nouvelle rallonge 126b' est accouplée à l'extrémité de la tige cylindrique 126a' et l'ensemble ainsi formé est introduit dans le prolongement 128, puis dans le corps 114 afin de remettre l'éjecteur dans des conditions de fonctionnement.

Lorsque ces opérations sont terminées, la boîte à gants 186 est déconnectée du prolongement tubulaire 128 et la pièce 130 fixée sur ce prolongement et assurant le maintien en place de la tuyère de l'éjecteur est remise en place.

Bien entendu, l'invention n'est pas limitée aux modes de réalisation qui viennent d'être décrits à titre d'exemples, mais en couvre toutes les variantes. En particulier, il est important de noter que les opérations concernant le démontage et la remise en place des tuyères de l'éjecteur sont des opérations généralement connues qui ne font pas partie de l'invention. Par ailleurs, il est également important d'observer que le procédé de débouchage selon l'invention n'est pas limité à des tuyauteries accessibles après enlèvement de la tuyère d'un éjecteur mais peut s'appliquer dans tous les cas où un organe amovible permet d'accéder à une tuyauterie éventuellement bouchée. De ce point de vue, il est également important d'observer que le procédé de débouchage selon l'invention ne concerne pas uniquement l'industrie nucléaire mais peut être appliquée dans tous les cas où des tuyauteries véhiculant des produits dangereux peuvent se boucher accidentellement, notamment dans l'industrie chimique.

## Revendications

1. Procédé de débouchage d'une tuyauterie (16;116) véhiculant des produits dangereux, cette tuyauterie débouchant dans un corps tubulaire normalement obturé par un organe amovible (24,26;124,126a,126b), ce procédé étant caractérisé par le fait qu'il comprend les étapes suivantes :
- dépose de l'organe amovible et mise en place d'un organe de guidage (42;142;220) dans le corps tubulaire ;
- introduction dans la tuyauterie, au travers d'une boîte étanche (56;186) accostée sur le corps tubulaire et d'un passage forme dans l'organe de guidage, d'un furet hydraulique (66;166) relié à une source de fluide hydraulique sous haute pression (70,170), de façon à déboucher la tuyauterie par érosion d'un bouchon obstruant cette dernière ;
- récupération simultanée des effluents d'érosion, par un circuit de vidange débouchant dans ladite boîte étanche ;
- retrait du furet dans un enrouleur de conditionnement (84,184) accosté sur la boîte étanche ;
- rinçage simultané du furet à sa sortie de l'organe de guidage, à l'intérieur de la boîte étanche ;
- dépose de l'organe de guidage et remise en place de l'organe amovible.

2. Procédé selon la revendication 1, caractérisé par le fait qu'on utilise un furet comprenant une buse (72) possédant au moins un orifice avant (80) servant au débouchage de la tuyauterie et des orifices arrière (82) assurant l'avance du furet, l'évacuation des effluents d'érosion vers la boîte étanche et le nettoyage de la tuyauterie.

3. Procédé selon l'une quelconque des revendications 1 et 2, caractérisé par le fait qu'avant de déposer l'organe amovible (24,26), on procédé à un recul progressif de cet organe, de façon à vidanger la tuyauterie et à rincer ledit organe.

4. Procédé selon la revendication 3, caractérisé par le fait qu'avant de procéder au recul progressif de l'organe amovible, on accoste sur le corps tubulaire une boîte de vidange (32) que l'on raccorde sur le circuit de vidange et sur un circuit d'amenée de liquide de rinçage, puis on déconnecte ladite boîte de vidange pour procéder à la dépose de l'organe amovible.

5. Procédé selon la revendication 3, caractérisé par le fait qu'on accoste ladite boîte étanche (186) sur le corps tubulaire avant de procéder au recul progressif de l'organe amovible, et que l'on raccorde ladite boîte étanche sur le circuit de vidange et sur un circuit d'amenée de liquide de rinçage.

6. Procédé selon la revendication 5, caractérisé par le fait que, le corps tubulaire étant normalement obture par l'organe amovible (124,126a) et par une rallonge (126b) dudit organe située vers l'extérieur par rapport à ce dernier, on utilise une boîte étanche (186) contenant un barillet (188) à au moins trois alvéoles (190), on place dans deux de ces alvéoles, préalablement à l'accostage de la boîte étanche sur le corps tubulaire, une rallonge de guidage (220) et une rallonge de rechange (126b') et on introduit la rallonge dudit organe amovible dans la troisième alvéole lors du recul progressif de l'organe amovible.

7. Procédé selon la revendication 6, caractérisé par le fait qu'avant d'introduire le furet hydraulique dans la tuyauterie, on procéde à la dépose de l'organe amovible (124,126a) et à la mise en place de l'organe de guidage (142) au moyen d'une enceinte blindée (214), à la mise en place de la rallonge de guidage (220) au moyen de la boîte étanche (186), puis au raccordement d'un orifice d'introduction du furet hydraulique (166) à la rallonge de guidage au moyen d'un tube de guidage (226) place dans la boîte étanche.

8. Procédé selon l'une quelconque des revendications précédentes, caractérisé par le fait qu'afin de déboucher une tuyauterie (16,116) débouchant latéralement dans le corps tubulaire (14,114) on positionne angulairement l'organe de guidage lors de sa mise en place et on utilise un organe de guidage dont le passage comporte un orifice de sortie équipe d'une languette de guidage rabattable (50) qui se déploie automatiquement dans ladite tuyauterie lorsque le furet (66) arrive au contact de cette languette.

## Patentansprüche

1. Verfahren zur Beseitigung von Verstopfungen einer Rohrleitung (16, 116) für den Transport gefährlicher Produkte, wobei diese Rohrleitung in einen normalerweise durch ein bewegliches bzw. herausziehbares Organ (24, 26, 124, 126a, 126b) verschlossenen röhrenförmigen Körper mündet, wobei dieses Verfahren dadurch gekennzeichnet ist, daß es die folgenden Schritte umfaßt:
- Entfernen des beweglichen Organs und Instellungbringen eines Führungsorgans (42, 142, 220) in dem röhrenförmigen Körper;
- Einführen in die Rohrleitung, durch ein dichtes Gehäuse (56, 186), angekoppelt an den röhrenförmigen Körper, und einen Durchgang, ausgebildet in dem Führungsorgan , eines hydraulischen Rohrreinigers (66, 166), verbunden mit einer Hydraulikflüssigkeitsquelle unter hohem Druck (70, 170), um die Verstopfung der Rohrleitung durch Erosion eines diese letztere verschließenden Pfropfens zu beseitigen;
- Gleichzeitige Wiedergewinnung der Erosionsabwässer durch einen Entleerungskreis, in das genannte dichte Gehäuse mündend;
- Zurückziehen des Rohrreinigers in eine Lagerungs-Wickeleinrichtung (84, 184), angekoppelt an das dichte Gehäuse;
- Spülen des Rohrreinigers simultan mit seinem Austreten aus dem Führungsorgan, innerhalb des dichten Gehäuses;
- Entfernen des Führungsorgans, und Wieder-Instellungbringen des herausziehbaren Organs.

2. Verfahren nach Anspruch 1, dadurch gekennzeichnet, daß man einen Rohrreiniger verwendet, der eine Düse (72) enthält, die wenigstens eine vordere Öffnung (80) aufweist, welche der Entstopfung der Rohrleitung dient, und hintere Öffnungen (82), welche die Fortbewegung des Rohrreinigers, die Entleerung der Erosionsabwässer zum dichten Gehäuse hin, und die Reinigung der Rohrleitung gewährleisten.

3. Verfahren nach einem der Ansprüche 1 und 2, dadurch gekennzeichnet, daß man vor dem Entfernen des herausziehbaren Organs (24, 26) dieses Organ progressiv zurückzieht, um die Rohrleitung zu entleeren und das genannte Organ zu spülen.

4. Verfahren nach Anspruch 3, dadurch gekennzeichnet, daß man, ehe man zum progressiven Zurückziehen des herausziehbaren Organs schreitet, an den röhrenförmigen Körper ein Entleerungsgehäuse (32) ankoppelt, das man an den Entleerungskreis anschließt und an einen Zuleitungskreis der Spülflüssigkeit, dann den Anschluß des genannten Entleerungsgehäuses löst, um die Entfernung des herausziehbaren Organs vorzunehmen.

5. Verfahren nach Anspruch 3, dadurch gekennzeichnet, daß man das genannte dichte Gehäuse (186) an den röhrenförmigen Körper ankoppelt ehe man zum progressiven Zurückziehen des herausziehbaren Organs schreitet, und daß man das genannte dichte Gehäuse an den Entleerungskreis anschließt und an einen Zuführungskreis von Spülflüssigkeit.

6. Verfahren nach Anspruch 5, dadurch gekennzeichnet, daß der röhrenförmige Körper normalerweise verschlossen ist durch das herausziehbare Organ (124, 126a) und durch eine Verlängerung (126b) des genannten Organs, außerhalb befindlich bezüglich dieses letzteren, daß man ein dichtes Gehäuse (186) verwendet, einen Zylinder (188) mit wenigstens drei Kanälen (190) enthaltend, daß man in zwei dieser Kanäle, vor dem Ankoppeln des dichten Gehäuses an den röhrenförmigen Körper, eine Führungsverlängerung (220) und eine Austauschverlängerung (126b') unterbringt, und daß man die Verlängerung des genannten herausziehbaren Organs in den dritten Kanal einführt beim progressiven Zurückziehen des herausziehbaren Organs.

7. Verfahren nach Anspruch 6, dadurch gekennzeichnet, daß man vor dem Einführen des hydraulischen Rohrreinigers in die Rohrleitung das Entfernen des herausziehbaren Organs (124, 126a) und das Instellungbringen des Führungsorgans (142) mittels eines gekapselten Behälters (214) und das Instellungbringen der Führungsverlängerung (220) mittels eines dichten Gehäuses (186) durchführt, sodann den Anschluß einer Einführungsöffnung des hydraulischen Rohrreinigers (166) an die Führungsverlängerung mittels eines Führungsrohrs (226) vornimmt, angeordnet in dem dichten Gehäuse.

8. Verfahren nach einem beliebigen der vorhergehenden Ansprüche, dadurch gekennzeichnet, daß, zur Entstopfung einer Rohrleitung (16, 116), die seitlich in den röhrenförmigen Körper (14, 114) mündet, man das Führungsorgan bei seinem Instellungbringen winkelförmig positioniert, und man ein Führungsorgan verwendet, dessen Durchgang eine Ausgangsöffnung aufweist, die ausgestattet ist mit einer klappbaren Führungszunge (50), die sich automatisch in die genannte Rohrleitung ausstreckt, wenn der Rohrreiniger (66) in Kontakt kommt mit dieser Zunge.

## Claims

1. Method for unclogging a pipe (16,116) carrying dangerous substances, this pipe opening into a tubular body normally blocked off by a movable member (24,26;124,126a,126b), this method comprising the following stages:
- depositing a removable member and placing of a guiding member (42,142,220) in the tubular body;
- introducing under high pressure into the pipe through a sealed box, (56,18b) docked onto the tubular body and through a passage formed in the guiding member a hydraulic shuttle (66,166) connected to a high pressure hydraulic source (70,170), so as to unclog the pipe via the erosion of a plug blocking up the latter;
- simultaneous recovery of erosion effluents by a drain circuit opening into said sealed box;
- removal of the shuttle in a conditioning winder (84,184) docked onto the sealed box;
- simultaneous rinsing of the shuttle on leaving the guiding member inside the sealed box;
- laying of the guiding member and the putting back in place of the removable member.

2. Method according to claim 1, characterized in that a shuttle is used including a nozzle (72) having at least one front orifice (80) used for unclogging of the pipe and rear orifices (82) ensuring the forward movement of the shuttle, the removal of erosion effluent towards the sealed box and cleaning of the pipe.

3. Method according to claim 1 or 2, characterized in that before the removable member (24,26) is laid, this member is gradually moved back so as to drain the pipe and rinse said member.

4. Method according to claim 3, characterized in that before gradually moving back the removable member, a drain box connected to the drain circuit and a rinsing liquid intake circuit (32) is docked onto the tubular body, said drain box being disconnected prior to laying of the removable member.

5. Method according to claim 3, characterized in that said sealed box (186) is docked onto the tubular body before gradually moving back said movable member and said sealed box is connected to the drain circuit and a rinsing liquid intake circuit.

6. Method according to claim 5, characterized in that, as the tubular body is normally blocked off by the removable member (124,126a) and an extension piece (126b) of said member situated outside with respect to the latter, a sealed box (186) is used containing a barrel (188) with at least three alveoles (190), a guiding extension piece (220) and an exchange extension piece (126b') are placed in two of these alveoles prior to docking of the sealed box on the tubular body, the extension piece of said removable member being introduced into the third alveole at the time of the backward movement of the removable member.

7. Method according to claim 6, characterized in that before introducing the hydraulic shuttle into the pipe, the removable member (124,126a) is deposited and the guiding member (142) is placed with the aid of a shielded chamber (214), followed by the connection of an orifice for introduction of the hydraulic shuttle (166) to the guiding extension piece (220) with the aid of a guiding tube (226) placed in the sealed box (186).

8. Method according to any one of the preceding claims, characterized in that, so as to unclog a pipe (16,116) opening laterally into the tubular body (14,114), the guiding member is angularly positioned at the time it is placed and a guiding member is used whose passage comprises an outlet equipped with a hinged guiding tongue (50) which is automatically deployed in said pipe when the shuttle (66) arrives in contact with said tongue.
